# EUROPEAN PATENT APPLICATION

(11) **EP 2 053 444 A1**
(43) Date of publication of application: **29.04.2009**
(21) Application number: 07118998.9
(22) Date of filing: 22.10.2007
(51) Int. Cl.: G02B 23/00, G02B 23/18, H04N 5/225

(54) **Optical system**

(71) Applicant: Wings Aktiebolag, 426 77 Västra Frölunda (SE)
(72) Inventor: Witte, Stefan, 426 76, VÄSTRA FRÖLUNDA (SE)
(74) Representative: Edlund, Fabian

(57) **Abstract**

The present invention relates to an optical system (100, 200), comprising a first optical module (110) adapted to provide a first view of a scene, a second optical module (114) adapted to provide a second view of the scene, and a viewfinder (106), wherein the optical system (100, 200) further comprises a first tubular member (102) at one end connected to the viewfinder (106) and at the second end connected to the first optical module (110), and a second tubular member (104) at one end connected to the viewfinder (106) and at the second end connected to the second optical module (114), thereby allowing for a user of the optical system (100, 200) to view both the first and the second view of the scene.

An advantage with the invention is that the introduction of the two tubular members eliminates the need for introducing complex elements in the optical system, thereby resulting in a less expensive end product suitable in a low cost consumer environment.

## Description

### Field of the invention

The present invention relates to an optical viewing system comprising an image sensor for capturing a digital still image of a scene, and a telescope module for providing a direct magnified view of the scene.

### Description of the related art

In using conventional hand-held viewing instruments, the largest useful magnification is restricted by the difficulty experienced by a user holding such handheld instruments sufficiently stable. The slightest shaking movement of the instrument causes the image viewed by the user to shake. In the case of high degrees of magnification, the shaking movements affect the image to such an extent that as to make perception thereof difficult. Hand-held viewing instruments therefore are rarely used for magnification above ten, and a magnification of seven or eight is common for practical purposes. When viewing instruments are used to view objects that appear small against a large background, such as birds or airplanes against the sky, high-magnification instruments may make it difficult to find the objects one wishes to study, as high magnification reduces the field of vision.

US 7 277 119 provides an approach to this problem, in which a hand-held unit comprising a binocular and a camera is disclosed. A flip-up display screen is mounted on top of the hand-held unit and provides a possibility to play back images captured by the camera. The hand-held unit furthermore provides the possibility to zoom into the captured images during playback. However, having a flip-up display screen mounted away from the binocular provides problems as the user of the hand-held unit needs to change his attention from the binoculars viewfinder to the display unit if wanting to study the zoomed version of the captured images.

A solution to this problem is illustrated in US 2003/0112355, providing a dual-purpose viewfinder. The dual-purpose viewfinder is operable in a framing mode and a viewing mode, where in the framing view it is provided a direct line-of-sight through the viewfinder for live reviewing. Then, in the viewing mode, an angled mirror is raised into the viewfinders line-of-sight such that stored images are reflected from an internal display through the viewfinder. However, this solution also pose problems as there are a large plurality of movable elements present in the viewfinder, resulting in a complex implementation and thus an expensive end product.

### Object of the invention

Therefore, there is a need for an improved optical system, and more specifically to an improved optical system that overcome or at least alleviates the cost problems according to prior art.

### Summary of the invention

According to an aspect of the invention, the above object is met by an optical system, comprising a first optical module adapted to provide a first view of a scene, a second optical module adapted to provide a second view of the scene, and a viewfinder, wherein the optical system further comprises a first tubular member at one end connected to the viewfinder and at the second end connected to the first optical module, and a second tubular member at one end connected to the viewfinder and at the second end connected to the second optical module, thereby allowing for a user of the optical system to view both the first and the second view of the scene.

The present invention is based on the understanding that the human peripheral vision is rather weak, and that by dividing the field of vision for the user, in a similar manner as in relation to bifocal glasses, it is possible to allow for the user to view both the first and the second view of the scene. Thus, in a first mode, e.g. an overview mode, the user of the optical system position the center of his field of view, i.e. center of gaze, to essentially coincide with the center axis of the first tubular member, wherein the user will view the first, possibly magnified at a low level, view of the scene. At this point, the image provided through the second tubular member will reside in the periphery vision of the user, and thus not disturb the first view, e.g. overview, of the scene.

Therefore, if for example arranging the center axis of the first tubular member in a horizontal plane, and positioning the center axis of the second tubular member at a lower level, it is possible for the user to repositioning the center of his gaze to coincide with the center axis of the second tubular member. At this point, in a second, possible detailed, mode, the image provided through the first tubular member will fall into the user's periphery vision and thus not disturb the user when looking at the second view through the second tubular member.

An advantage with the invention is that the introduction of the two tubular members eliminates the need for introducing complex elements in the optical system, thereby resulting in a less expensive end product suitable in a low cost consumer environment. As mentioned above, the first view of the scene is preferably an overview of the scene, and the second view of the scene is preferably a detailed view of the scene. Furthermore, if the first view of the scene for example is provided at a first magnification level, and the second view is provided at a second magnification level, the first magnification level being lower then the second magnification level, the first image of the scene simplifies for the user to obtain a general view and to find an object for the user in an overview "search" mode, when photographing for instance birds, compared to the case when using a regular camera. Preferably, the first view of the scene is selected to have a magnification level between one and eight, and the second view of the scene is selected to have a magnification level between approximately eight and 16. Other magnification levels are of course possible and within the scope of the present invention.

The first and the second tubular member are preferably cylindrical, i.e. like a pipe. However, it is of course possible to use other type of shapes, such as tubular members having a squared, pentagonal, hexagonal, or different section surface.

In a preferred embodiment, the first optical module comprises a telescope module for providing a direct view of the scene, and the second optical module comprises a display unit for displaying a digital image of the scene captured using an image sensor. Furthermore, the first tubular member is at its second end connected to the telescope module, and the second tubular member is at its second end connected to the display unit. It will thereby be possible for a user of the optical system to view both the digital still image of the scene and the direct view of the scene. Using an image sensor for capturing a digital, e.g. detailed view of the scene provides, for example for the possibility to store the detailed view of the scene for later playback. It should be noted that a video sequence comprises a plurality of still images, and thus, the displays are adapted to display a stream of digital still images. The digital still image is preferably a detailed view of the scene being magnified for example magnified eight to 16 times. As mentioned above, other magnification levels are of course possible and within the scope of the present invention.

In a preferred embodiment of the present invention, an angle between the center axis of the first and the second tubular members are at least 10 degrees. However, the angle between the two tubular members is preferably adjustable between 5 and 45 degrees. This allows different users to adapt the optical systems based on for example their periphery vision.

For further enhancing the direct view of the scene, the optical system according to the present invention further comprises means for turning on and off the display unit. By turning off the display when in overview mode the display becomes dark and the user of the optical system is not disturbed by the light coming from the display when looking at the scene in overview mode. On the other hand, when turning on the display for looking at a detailed view of the scene, the switching of the display from off to on will catch the attention of the user such that he will reposition the center of his field of view to become essentially parallel to the center axis of the second tubular member that is connected to the display unit.

Preferably, the optical system additionally comprises a control unit and a digital storage unit for storing digital images captured by the image sensor. Such a digital storage unit may be an USB or a flash memory card, e.g. CompactFlash, Memory Stick, Secure Digital etc.

The image sensor is preferably selected to be for example a CMOS or a CCD image sensor. The image sensor used may however depend on the cost segment, where the CMOS sensor generally is cheaper but than also potentially, presently, provide a result having lower quality than a CCD sensor. It is also possible, and within the scope of the invention, to use an over dimensioned image sensor which generates an image that is over dimensioned in relation to the display. Then, when studying the detailed view of the scene on the display, it will be possible to tilt and pan, still being provided with the same high resolution image.

In another preferred embodiment, the optical system further comprising a lens arranged in front of the image sensor, thereby providing additional zoom capabilities. Such a lens, for example a combined zoom lens providing multiple magnification levels (e.g. a motorized zoom lens) may be controlled using the control unit. Additionally, the optical system may be further equipped with communication circuitry and an antenna for providing wireless communication between the optical system and another electronic unit. Such an addition is especially useful when the user transfers a captured image between the optical system and an externally arranged electronic unit, e.g. between the optical system and a laptop or a personal computer.

In an alternative embodiment of the present invention, the image sensor is comprised in a housing, e.g. forming a camera, which is detachably connected to the optical system, thereby making it possible to use an already available camera. By providing for the possibility to use an already available camera, such as a compact camera or a mobile phone having camera capabilities, and to that attach the camera to the reminder of the optical system, it will be unnecessary for the user of the camera to purchase an additional combined camera and optical system as provided according to prior art. Instead, the optical system according to the present embodiment acts as an accessory to the already available camera, thus providing additional features to the camera. Hence, the user can choose whether to use the camera as a regular one or as a type of optical system. In such a case, the reminder of the optical system does not have to comprise expensive electronics and can thus be manufactured at a relatively low cost, making it suitable in a low cost consumer environment.

In another alternative embodiment of the invention, the first optical module comprises a first telescope module for providing a direct view of the scene, and the second optical module comprises a second telescope module for providing a detailed view of the scene. Such an embodiment is for example useful in relation to a sight for a firearm, wherein the user for example can be provided with both an overview of the scene and a detailed view of the scene, all without having to move his focus from the optical system. An advantage with this embodiment is that no electrical power has to be provided, conversely to the case where the optical system comprises an image sensor and a display unit. It should be noted that it also can be possible, and within the scope of the invention, to use a first display connected to the first tubular member, and a second display connected to the second tubular member, where the displays are arranged to provide images for example having different resolution or displayed at different zoom levels. In such a case, the optical system is completely digital and both modes displays digital images of the scene, preferably at different magnification levels and/or at different resolution levels. However, alternatively the first view can be digital and the second view can be provided by a telescopic module.

The optical system according to the present invention is preferably, but not exclusively, arranged as a component in a binocular arrangement. In such an embodiment, the binocular arrangement is adapted to comprise two optical systems as discussed above, wherein the viewfinder of each of the optical systems are positioned such that the eyes of a user of the binocular arrangement coincide with each of the viewfinders.

Such a binocular arrangement provides the user not only with a stereoscopic overview of the scene, but also a detailed stereoscopic view of the scene. If providing the binocular arrangement with appropriate storage means, it is thus possible to record a stereoscopic sequence which thereby will allow for the rendering of three-dimensional computer based images, or for reviewing the captured stereo images using appropriate stereoscopic equipment known in the art.

However, in an alternative embodiment, the binocular arrangement instead comprises one optical system according to the present invention, a further display unit for displaying a digital still image, a further telescope module for allowing a direct magnified view of the scene, a further viewfinder, a third tubular member at one end connected to the further viewfinder and at the second end connected to the further display unit, and a fourth tubular member connected at one end to the further viewfinder and at the second end to the further telescope module, wherein the digital still image captured by the image sensor is displayed on the further display unit.

According to this embodiment, only one image sensor is used for capturing a digital image which in turn is displayed on both the displays. Even though this embodiment in some sense provides a loss in relation to the stereoscopic capturing capabilities, the use of only one image sensor will provide a more compact binocular arrangement and also a less expensive product. It should be noted that it also would be possible to use only one display for both eyes, and arrange optical guidance means (e.g. prisms) for directing the image displayed on the only one display through each of the first and the third tubular members to each of the respective eyes of the user.

As stated above, each of the viewfinders are preferably arranged to coincide with the eyes of the user of the binocular arrangement. Therefore, the binocular arrangement preferably includes an interpupillary distance adjustment mechanism to accommodate multiple users. Accommodation for vision correction and a focus mechanism may also be provided.

### Brief description of the drawings

These and other aspects of the present invention will now be described in more detail, with reference to the appended drawings showing currently preferred embodiments of the invention, in which:
Figure 1 is a conceptual block diagram illustrating an optical system according to a currently preferred embodiment of the present invention; and
Figure 2a and 2b are views of an exemplary embodiment of the optical system according to the present invention.

### Detailed description of currently preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

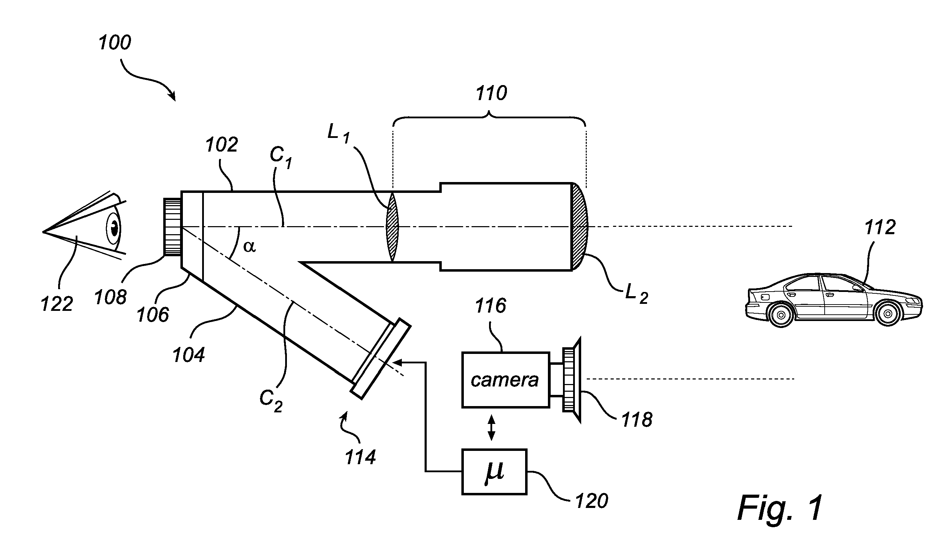

Referring now to the drawings and to figure 1 in particular, there is provided a conceptual illustration of the inventive concept. An optical system 100 is illustrated, comprising a first tubular member 102 and a second tubular member 104. Each of the tubular members 102, 104 have a center axis C₁, C₂, respectively. A first end of each of the tubular members 102, 104 is connected to a viewfinder 106, onto which also a ocular 108 is arranged. At the second end of the first tubular member 102, a first optical module is arranged, in the present embodiment a telescope module 110 adapted for providing a direct view of a scene, for example the car 112 shown in figure 1. The telescope module generally comprises a complex lens system, in figure 1 illustrated using two lenses L₁, L₂. The skilled addressee understands that different lens arrangements are possible, and within the scope of the invention.

At the second end of the second tubular member 104 a second optical module is provided, in the present embodiment a display unit 114 for displaying a digital image or a video sequence. The display unit 114 preferably comprises a display panel and a backlight arranged behind the display panel, e.g. forming an LCD. The digital image, or video sequence, is provided by a digital camera 116 comprising an image sensor, for example a CCD or a CMOS sensor. The digital camera 116 is preferably arranged to overlook the same scene as the telescope module 110, for example the car 112. Preferably, the telescope module 110 provides an overview of the scene, and the digital camera 116 provides a detailed view of the scene. In the illustrated embodiment, the camera is provided with a motorized lens 118. A lens having a fixed magnification is also possible.

The optical system 100 further comprises a control unit 120 for controlling the display unit 114, the digital camera 116, and the communication between the display unit 114 and the digital camera 116. The control unit 120 may include a microprocessor, a microcontroller, a programmable digital signal processor or another programmable device. The control unit 120 may also, or instead, include an application specific integrated circuit (ASIC), a programmable gate array, a programmable array logic, a programmable logic device, or a digital signal processor. Where the control unit 120 includes a programmable device such as the microprocessor or microcontroller mentioned above, the processor may further include computer executable code that controls operation of the programmable device.

Also, the optical system 100 can comprise storage means for storing the images/video sequences captured using the digital camera 116, and be provided with communication means for transmitting captured images and video sequences to an external unit, for example in the form of a portable or stationary computer, such as a laptop, a Personal Digital Assistant (PDA), or a desktop. The transmission may be wired or wireless, including for example wired connections like USB, FireWire, VGA, or similar, and wireless connections like WLAN, Bluetooth, infrared, or similar. As discusses above, it is possible, and within the scope of the invention, to use an already existing digital camera. An example of such a camera is a mobile phone having camera capability. Using a mobile phone, it is also possible to use the inbuilt mobile functionality, for example using mobile transmission means (e.g. CDMA, GSM, 3G, or similar), to transfer the captured image to a remotely located electronic unit, for example a remote server.

In the illustrated version of the optical system 100, the overview of the scene is provided using "analog means", i.e. using the telescope module 110, and the detailed view is provided using "digital means", i.e. the digital camera 116. It would however be possible to provide different combinations, e.g. analog overview - analog detailed view, digital overview - analog detailed view, or digital overview - digital detailed view.

The overview of the scene can be provided at a low magnification level, for example is predetermined to be around four times, and the detailed view of the scene can for example be predetermined to have a magnification level around 16 times. It would also be possible to use different magnification levels. However, the detailed view of the scene should preferably be kept to less than six times magnification, as a higher magnification level will be sensitive to shaky movements.

In another preferred embodiment the digital camera 116 is equipped with an oversized image sensor. When using an oversized image sensor, the digital camera 116 captures a digital image that is larger that what is possible to display on the display unit 114. This allows for the possibility to pan and tilt in the detailed view of the scene. In an exemplary embodiment the display unit 114 is arranged to display a digital image having a size of 640 times 480 pixels, and the image sensor is able to capture a digital image having a size of 5120 times 3840 pixels, i.e. the image sensor can capture eight times the image information that is viewable on the display unit 114.

During operation, a user of the optical system 100 positions his eye 122 in connection with the ocular 108. In "overview mode", the user looks straight forward (i.e. gaze parallel to C₁), and thus the overview of the scene will be visible through the telescope module 110. By repositioning his gaze, preferably downwards (other directions are possible), the detailed view of the scene displayed on the display unit 114 will fall into the users field of view, thereby entering the "detailed mode". As discussed above, the view not currently in the user's field of view will instead fall into the periphery vision of the user, and thus not disturb the view currently in the user's field of view (i.e. gaze parallel to C₂). An angle α between the center axis C₁, C₂, of the two tubular members 102, 104 is preferably at least 10 degrees. However, depending on the user, the angle α is preferably adjustable between five and 45 degrees.

For further enhance the user experience, the optical system 100 preferably comprises means for turning on and off the display unit 114. Such means, for example a button or a switch, is preferably connected to the control unit 120. Furthermore, the overview of the scene is preferably provided with a crosshair, or similar, for indicating the center of the overview. Thus, when in overview mode, the user may "aim" the crosshair at a point in the scene that is of interest, and then reposition his gaze to the detailed mode where it will be displayed an area having the same center as the crosshair had in the overview of the scene. Also, and as is discussed above, it is possible to combine two optical systems 100 for use as a binocular having dual functionality. In such a binocular, it might not be necessary to use two digital cameras, and thus, one of the digital cameras may be omitted.

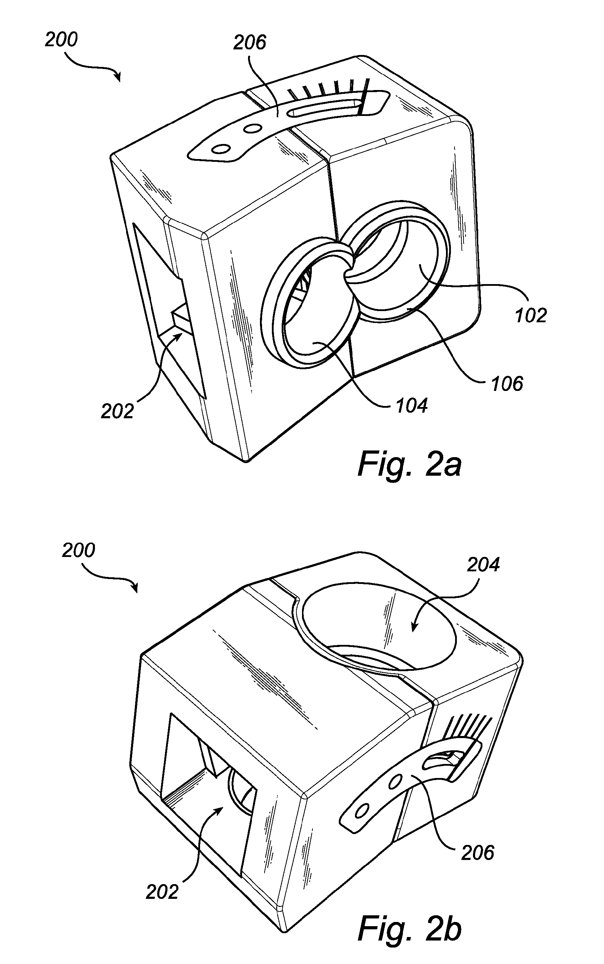

Turning now to figure 2a and 2b which shows two different perspective views of an exemplary optical system 200 according to the present invention. The viewfinder 106 is as discussed above connected to the first and the second tubular members 102, 104. In figure 2a, no ocular is illustrated, but it would be possible to arrange an ocular in connection to the viewfinder 106. On one side of the optical system 200, there is provided a first compartment 202 for arranging the display unit 114, and on another side of the optical system 200, there is provided a second compartment 204 for arranging the tubular module 110. Furthermore, the optical system 200 is provided with adjustment means 206 for adjusting the angle α between the center axis C₁, C₂ of the first and the second tubular members 102, 104, respectively.

The skilled addressee realizes that the present invention by no means is limited to the preferred embodiments described above. On the contrary, many modifications and variations are possible within the scope of the appended claims. Furthermore, the digital still images captured using the camera can be processed and enhanced using different digital image processing methods known in the art, preferably by means of the control unit comprised in the optical system according to the present invention.

## Claims

1. An optical system (100, 200), comprising:
- a first optical module (110) adapted to provide a first view of a scene;
- a second optical module (114) adapted to provide a second view of the scene; and
- a viewfinder (106),
**characterized in that** the optical system (100, 200) further comprises a first tubular member (102) at one end connected to the viewfinder (106) and at the second end connected to the first optical module (110), and a second tubular member (104) at one end connected to the viewfinder (106) and at the second end connected to the second optical module (114), thereby allowing for a user of the optical system (100, 200) to view both the first and the second view of the scene.

2. Optical system (100, 200) according to claim 1, wherein the first view of the scene is an overview of the scene and the second view of the scene is a detailed view of the scene.

3. Optical system (100, 200) according to claim 1, wherein the first optical module (110) comprises a telescope module for providing a direct view of the scene, and the second optical module (114) comprises a display unit for displaying a digital image of the scene captured using an image sensor (116), and wherein the first tubular member (102) at its second end connects to the telescope module (110), and the second tubular member (104) at its second end connects to the display unit (114).

4. Optical system (100, 200) according to claim 3, wherein the digital image is a detailed view of the scene.

5. Optical system (100, 200) according to any one of the preceding claims, wherein an angle between the center axis (C₁, C₂) of the first and the second two tubular members (102, 104) are at least 10 degrees.

6. Optical system (100, 200) according to any one of claims 3 - 5, further comprising means for turning on and off the display unit.

7. Optical system (100, 200) according to any one of claims 3 - 6, further comprising a control unit (120) and a digital storage unit for storing digital images captured by the image sensor.

8. Optical system (100, 200) according to any one of claims 3 - 7,
wherein the image sensor is at least one of a CCD sensor or a CMOS sensor.

9. Optical system (100, 200) according to any one of claims 3 - 8, further comprising a lens (118) arranged in front of the image sensor, thereby providing zoom capabilities.

10. Optical system (100, 200) according to any one of claims 3 - 9,
wherein the image sensor is comprised in a housing (116) which is detachably connected to the optical system (100, 200).

11. Optical system (100, 200) according to claim 10, wherein the housing is a mobile telephone having camera capabilities.

12. Optical system (100, 200) according to claim 1, wherein the first optical module (110) comprises a first telescope module for providing a direct view of the scene, and the second optical module comprises a second telescope module for providing a detailed view of the scene.

13. Optical system (100, 200) according to any one of the preceding claims, wherein the optical system (100, 200) further comprises an ocular (108) arranged together with the viewfinder (106).

14. Binocular arrangement, comprising two optical systems (100, 200) according to any one of claims 1 - 13, wherein the viewfinder (106) of each of the optical systems (100, 200) are positioned such that the eyes of a user of the binocular arrangement coincide with each of the viewfinders (106).

15. Binocular arrangement, comprising:
- an optical system (100, 200) according to any one of claims 3 - 11,
- a further display unit for displaying a digital still image;
- a further telescope module for allowing a direct magnified view of the scene;
- a further viewfinder;
- a third tubular member at one end connected to the further viewfinder and at the second end connected to the further display unit; and
- a fourth tubular member connected at one end to the further viewfinder and at the second end to the further telescope module,
wherein the digital still image captured by the image sensor is displayed on the further display unit.

16. Binocular arrangement according to claim 15, wherein the viewfinder (106) and the further viewfinder each are positioned to coincide with the eyes of a user of the binocular arrangement.

17. Binocular arrangement according to any one of claims 14 - 16,
wherein the positions of the viewfinders are adjustable.
